(19) Europäisches Patentamt
European Patent Office
Office européen des brevets

(11) **EP 4 564 460 A1**

(12) **EUROPEAN PATENT APPLICATION**
published in accordance with Art. 153(4) EPC

(43) Date of publication:
**04.06.2025 Bulletin 2025/23**

(21) Application number: 23920333.4

(22) Date of filing: **06.02.2023**

(51) International Patent Classification (IPC):
**H01M 4/136** (2010.01)       **H01M 4/13** (2010.01)
**H01M 10/0525** (2010.01)

(52) Cooperative Patent Classification (CPC):
**H01M 4/13; H01M 4/136; H01M 10/0525;**
Y02E 60/10

(86) International application number:
**PCT/CN2023/074658**

(87) International publication number:
**WO 2024/164118 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central, Hong Kong (CN)**

(72) Inventors:
• **SHANG, Yibo**
**Ningde, Fujian 352100 (CN)**

• **QIN, Yiming**
**Ningde, Fujian 352100 (CN)**
• **PAN, Jianfu**
**Ningde, Fujian 352100 (CN)**
• **XU, Xiaofu**
**Ningde, Fujian 352100 (CN)**
• **ZHANG, Xinyu**
**Ningde, Fujian 352100 (CN)**
• **LIU, Qian**
**Ningde, Fujian 352100 (CN)**
• **YE, Yonghuang**
**Ningde, Fujian 352100 (CN)**

(74) Representative: **Gong, Jinping**
**CocreateIP**
**Neumarkterstr. 21**
**81673 München (DE)**

(54) **POSITIVE ELECTRODE SHEET, SECONDARY BATTERY, AND ELECTRICAL APPARATUS**

(57)    This application discloses a positive electrode plate, a secondary battery, and an electric apparatus. The positive electrode plate includes a positive electrode active material layer, and the positive electrode active material layer includes a first positive electrode active material and a second positive electrode active material. The first positive electrode active material includes $Li_aNi_bCo_cM_{1d}M_{2e}O_fR'_g$, where $0.75 \leq a \leq 1.2$, $0 < b < 1$, $0 < c < 1$, $0 < d < 1$, $0 \leq e \leq 0.2$, $1 \leq f \leq 2.5$, $0 < g \leq 1$, $f+g \leq 3$, and $M_1$ is element Mn and/or element Al. The second positive electrode active material includes $Li_{1+x}M_{3n}Mn_{1-y}A'_yP_{1-z}E_zO_4$, where $-0.100 \leq x \leq 0.100$, $0 \leq n \leq 1.1$, $0.001 \leq y \leq 0.500$, $0 \leq z \leq 0.100$, and A' includes one or more elements of Zn, Al, Na, K, Mg, Mo, W, Ti, V, Zr, Fe, Ga, Sn, Sb, Nb, and Ge. The positive electrode plate satisfies:

$$0.002 \leq \frac{10 \times T}{d} \times w_{(Mn)} \times R \leq 0.2,$$

where $w_{(Mn)}$ is a mass fraction of Mn in the positive electrode active material layer; d is a thickness of the positive electrode active material layer, measured in mm; T is a weight of the positive electrode active material layer of the positive electrode plate in per unit area, measured in g/cm²; and R is resistance of the positive electrode plate at 25°C, measured in Ω.

EP 4 564 460 A1

**Description**

**TECHNICAL FIELD**

This application pertains to the field of battery technologies, and specifically, relates to a positive electrode plate, a secondary battery, and an electric apparatus.

**BACKGROUND**

Characterized by green, environmental friendliness, high energy, low carbon, and the like, lithium-ion batteries are widely used not only in energy storage power supply systems such as hydro, thermal, wind, and solar power plants, but also in electric transportation tools such as electric bicycles, electric motorcycles, electric vehicles, and fields such as military equipment and aerospace. Currently, with the development of the society, requirements on lithium-ion batteries are also increasingly high. Fast charge performance and long service life have become important capability indicators for lithium batteries. Currently, ternary layered positive electrode materials, such as nickel-cobalt-manganese (NCM) system material, are commonly selected for lithium-ion battery positive electrode materials. However, conventional NCM system materials have poor rate tolerance boundaries at low voltages, which affects the fast charge capability and actual available capacity of batteries.

**SUMMARY**

In view of the technical problems in background, this application provides a positive electrode plate to broaden the rate tolerance boundaries at high and low voltages of a positive electrode active material, so as to improve fast charge capability while long service life is ensured.

To achieve the above objective, a first aspect of this application provides a positive electrode plate, where the positive electrode plate includes a positive electrode active material layer, and the positive electrode active material layer includes a first positive electrode active material and a second positive electrode active material; where

the first positive electrode active material includes $Li_aNi_bCo_cM_{1d}M_{2e}O_fR'_g$, where $0.75 \leq a \leq 1.2$, $0 < b < 1$, $0 < c < 1$, $0 < d < 1$, $0 \leq e \leq 0.2$, $1 \leq f \leq 2.5$, $0 \leq g \leq 1$, $f+g \leq 3$, $M_1$ is element Mn and/or element Al, $M_2$ includes one or more elements of Zr, Zn, Cu, Cr, Mg, Fe, V, Ti, Sr, Sb, Y, W, and Nb, and R' includes one or more elements of N, F, S, and Cl;
the second positive electrode active material includes $Li_{1+x}M_{3n}Mn_{1-y}A'_yP_{1-z}E_zO_4$, where $-0.100 \leq x \leq 0.100$, $0 \leq n \leq 1.1$, $0.001 \leq y \leq 0.500$, $0 \leq z \leq 0.100$, $M_3$ includes one or more elements of Zn, Al, Na, K, Mg, Nb, Mo, and W, A' includes one or more elements of Zn, Al, Na, K, Mg, Mo, W, Ti, V, Zr, Fe, Ga, Sn, Sb, Nb, and Ge, and E includes one or more elements of B, Si, N, S, F, Cl, and Br; and
the positive electrode plate satisfies

$$0.002 \leq \frac{10 \times T}{d} \times w_{(Mn)} \times R \leq 0.2 \quad,$$

where

$w_{(Mn)}$ is a mass fraction of Mn in the positive electrode active material layer;
d is a thickness of the positive electrode active material layer, measured in mm;
T is a weight of the positive electrode active material layer of the positive electrode plate in per unit area, measured in $g/cm^2$; and
R is resistance of the positive electrode plate at 25°C, measured in $\Omega$.

As compared with the prior art, the positive electrode plate of the first aspect of this application has at least the following beneficial effects: (1) The $Li_aNi_bCo_cM_{1d}M_{2e}O_fR'_g$ positive electrode active material system has poor rate tolerance boundaries at low SOC (state of charge, that is, remaining power level), while $Li_{1+x}M_{3n}Mn_{1-y}A'_yP_{1-z}E_zO_4$ has poor rate tolerance boundaries at high SOC. Combining the two in use can compensate for defects of the two systems, thereby broadening the rate tolerance boundaries at high and low SOCs, and enhancing the fast charge capability. (2) Mixing the positive electrode active material $Li_aNi_bCo_cM_{1d}M_{2e}O_fR'_g$ with the positive electrode active material $Li_{1+x}M_{3n}Mn_{1-y}A'_yP_{1-z}E_zO_4$ can further balance high energy density and good cycling performance, thereby extending the service life. (3) Although the mechanism is not clear yet, the inventors have found that controlling the percentage of element Mn in the positive electrode active material layer, the thickness and surface density of the positive electrode active material layer, and the resistance of the positive electrode plate to meet the above formula ranges can ensure the fast charge capability, energy density, and cycling performance, thereby obtaining a fast charge positive electrode plate with long service life.

In some embodiments of this application, $0.27 \leq \dfrac{w_{(A')}}{w_{(P)}} \leq 1.63$, optionally, $0.72 \leq \dfrac{w_{(A')}}{w_{(P)}} \leq 1.26$, where $w_{(A')}$ is a mass fraction of A' in the positive electrode active material layer, and $w_{(P)}$ is a mass fraction of P in the positive electrode active material layer. Controlling $\dfrac{w_{(A')}}{w_{(P)}}$ within the given range can further balance the fast charge performance and long service life.

In some embodiments of this application, $0.01 \leq w_{(A')} \leq 0.05$.

In some embodiments of this application, the second positive electrode active material includes at least one of the following two positive electrode active materials: (i) $0.001 \leq y \leq 0.500$, and n=0, where the second positive electrode active material is $Li_{1+x}Mn_{1-y}A'_yP_{1-z}E_zO_4$; and (ii) $0.001 \leq y \leq 0.500$, and $0.9 \leq n \leq 1.1$, where the second positive electrode active material is $Li_{1+x}M_{3n}Mn_{1-y}A'_yP_{1-z}E_zO_4$, where optionally, the second positive electrode active material is: (ii) $Li_{1+x}Mn_{1-y}A'_yP_{1-z}E_zO_4$.

In some embodiments of this application, $0.032 \leq T \leq 0.043$, optionally, $0.035 \leq T \leq 0.039$. Controlling T within the given range can further obtain improved fast charge performance and cycle life, as well as higher energy density.

In some embodiments of this application, $0.11 \leq d \leq 0.16$, optionally, $0.12 \leq d \leq 0.14$. Controlling d within the given range can further obtain improved fast charge performance and cycle life, as well as higher energy density.

In some embodiments of this application, $0 < R \leq 1.2$, optionally, $0 < R \leq 1$. Controlling R within the given range can further reduce the internal resistance of the electrode plate, thereby improving the fast charge performance and cycling performance.

In some embodiments of this application, $M_1$ is element Mn.

In some embodiments of this application, $3 \leq \dfrac{w_{(Mn)}}{w_{(A')}} \leq 20$, optionally, $4 \leq \dfrac{w(Mn)}{w(A')} \leq 18$, and more optionally, $5 \leq \dfrac{w_{(Mn)}}{w_{(A')}}\dfrac{w(Mn)}{w(A')} \leq 17$. Controlling $\dfrac{w_{(Mn)}}{w_{(A')}}$, within the given range can further balance the high energy density and good cycling performance in addition to improving the fast charge capability, thereby extending the service life.

In some embodiments of this application, a $D_v50$ particle size of the second positive electrode active material is 0.21 μm to 1.53 μm, optionally 0.32 μm to 1.4 μm, more optionally 0.41 μm to 1.25 μm, further optionally 0.38 μm to 1.1 μm, and furthermore optionally 0.47 μm to 0.91 μm.

In some embodiments of this application, a specific surface area of the second positive electrode active material is 9.2 m²/g to 23.6 m²/g, optionally 10.5 m²/g to 19.6 m²/g, more optionally 12.0 m²/g to 16.2 m²/g, further optionally 10.0 m²/g to 21.5 m²/g, and furthermore optionally 10.9 m²/g to 17.6 m²/g.

In some embodiments of this application, $5 \leq \dfrac{w_{(Mn)}}{w_{(A')}}\dfrac{w(Mn)}{w(A')} \leq 17$, $0.02 \leq \dfrac{10 \times T}{d} \times w_{(M_1)} \times R \leq 0.085$, optionally, $0.03 \leq \dfrac{10 \times T}{d} \times w_{(M_1)} \times R \leq 0.085$. Controlling the positive electrode plate to meet the given conditions can further ensure that the composite positive electrode has an excellent power capability while having long cycle life.

In some embodiments of this application, a $D_v50$ particle size of the first positive electrode active material is 2.1 μm to 6.3 μm, optionally 3.5 μm to 4.9 μm.

In some embodiments of this application, a specific surface area of the first positive electrode active material is 0.3 m²/g to 1.2 m²/g, optionally, 0.5 m²/g to 0.9 m²/g.

In some embodiments of this application, a surface of the first positive electrode active material is provided with a first coating layer, and optionally, the first coating layer includes one or more elements of Ti, Al, B, Nb, Zr, Si, and W.

In some embodiments of this application, a thickness of the first coating layer is 20 nm to 150 nm.

In some embodiments of this application, a surface of the second positive electrode active material is provided with a second coating layer, and optionally, the second coating layer includes at least one of pyrophosphate, phosphate, and carbon.

In some embodiments of this application, a thickness of the second coating layer is 10 nm to 50 nm.

In some embodiments of this application, in the second positive electrode active material, E includes one or more elements of B, Si, N, and S.

In some embodiments of this application, in the second positive electrode active material, A' includes one or more elements of Fe, Ti, V, Ni, Co, and Mg.

A second aspect of this application provides a secondary battery including the positive electrode plate in the first aspect of this application.

A third aspect of this application provides an electric apparatus that includes: the positive electrode plate according to the first aspect of this application and/or the secondary battery according to the second aspect of this application.

## DESCRIPTION OF EMBODIMENTS

The following further describes this application with reference to specific embodiments. It should be understood that these specific embodiments are merely intended to illustrate this application but not to limit the scope of this application.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. A person skilled in the art can clearly and implicitly understand that the embodiments described in this application can be combined with other embodiments.

"Ranges" disclosed in this application are defined in the form of lower limit and/or upper limit. A given range is defined by one lower limit and/or one upper limit selected, where the selected lower limit and/or upper limit defines boundaries of that particular range. The range defined in this way may include or exclude end values, and any combination can be formed. That is, any lower limit may be combined with any upper limit to form an unspecified range, and any lower limit may be combined with another lower limit to form an unspecified range, and likewise, any upper limit may be combined with any other upper limit to form an unspecified range. In addition, each individually disclosed point or single numerical value, as a lower limit or an upper limit, may be combined with any other points or single numerical value or combined with another lower limit or upper limit to form an unspecified range. For example, if a range not greater than 150 is provided for a specific parameter, it is understood that ranges of 10 to 140, 20 to 120, and the like that are not greater than 150 can also be envisioned. In addition, if low limit values of a range are given as 2.1 and 3.5, and upper limit values of the range are given as 4.9 and 6.3, the following ranges can all be envisioned: 2.1 to 6.3, 2.1 to 4.9, 3.5 to 6.3, and 3.5 to 4.9. In this application, unless otherwise stated, a value range of "10-50" is a short representation of any combination of real numbers between 10 and 50, where both 10 and 50 are real numbers. For example, a value range of "20-30" means that all real numbers in the range of "20-30" are listed herein, and "20-30" is just a short representation of a combination of these values.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed sequentially or randomly, preferably, performed sequentially. For example, a method including steps S1 and S2 indicates that the method may include steps S1 and S2 performed sequentially, or may include steps S2 and S1 performed sequentially. For example, that the method may further include step S3 indicates that step S3 may be added to the method in any sequence. For example, the method may include steps S1, S2, and S3, steps S1, S3, and S2, steps S3, S1, and S2.

Unless otherwise specified, "include" and "contain" mentioned in this application are inclusive or may be exclusive. For example, terms "include" and "contain" can mean that other unlisted components may also be included or contained, or only listed components may be included or contained. In this application, the term "a plurality of" means two or more than two and the term "a plurality of types" means two types or more than two types.

Unless otherwise specified, the term "and/or" in this application is only an associative relationship for describing associated objects, indicating that three relationships may be present. For example, A and/or B may indicate three cases: presence of only A; presence of both A and B; and presence of only B. In addition, the character "/" in this specification generally indicates an "or" relationship between contextually associated objects.

Unless otherwise defined, all technical and scientific terms used in this application shall have the same meanings as commonly understood by those skilled in the art to which this application relates. The terms used in this application are intended to merely describe the specific embodiments rather than to limit this application. The terms "include" and "have" and any other variations thereof in the specification and claims of this application are intended to cover non-exclusive inclusions. Unless otherwise specified, terms used in this application have common meanings generally understood by persons skilled in the art. Unless otherwise specified, numerical values of parameters mentioned in this application may be measured by using various measurement methods commonly used in the art (for example, testing may be performed by using a method provided in the embodiments of this application).

Currently, fast charge performance and long service life have become important capability indicators for lithium batteries. Currently, ternary layered positive electrode active materials (such as NCM) are mostly used to prepare positive electrode plates. However, as the number of cycles increases and the discharge time extends, the positive electrode materials of this system exhibit problems of increased internal resistance of a battery and electrode polarization of the battery. As a result, a discharge voltage reaches a cut-off voltage prematurely. There is a trend of a steep drop in discharge voltage in a discharge termination stage of a discharge curve, causing early termination of discharge, and affecting the actual available capacity of the battery. That is, the positive electrode material of this system has poor rate tolerance boundaries at low SOC, which affects the fast charge and cycling performance of the battery. In addition, although ternary layered positive electrode active materials (such as NCM) have a higher energy density, their cycle life and fast charge performance are not excellent.

In view of this, a first aspect of this application provides a positive electrode plate. The positive electrode plate includes a positive electrode active material layer, and the positive electrode active material layer includes a first positive electrode active material and a second positive electrode active material. The first positive electrode active material includes $Li_aNi_bCo_cM_{1d}M_{2e}O_fR'_g$, where $0.75 \leq a \leq 1.2$, $0 < b < 1$, $0 < c < 1$, $0 < d < 1$, $0 < e \leq 0.2$, $1 \leq f \leq 2.5$, $0 < g \leq 1$, $f + g \leq 3$, $M_1$ is element Mn and/or element Al, $M_2$ includes one or more elements of Zr, Zn, Cu, Cr, Mg, Fe, V, Ti, Sr, Sb, Y, W, and Nb, and R' includes one or more elements of N, F, S, and Cl. The second positive electrode active material includes $Li_{1+x}M_{3n}Mn_{1-y}A'_yP_{1-z}E_zO_4$, where $-0.100 \leq x \leq 0.100$, $0 \leq n \leq 1.1$, $0.001 \leq y \leq 0.500$, $0 \leq z \leq 0.100$, $M_3$ includes one or more elements of Zn, Al, Na, K, Mg, Nb, Mo, and W, A' includes one or more elements of Zn, Al, Na, K, Mg, Mo, W, Ti, V, Zr, Fe, Ga, Sn, Sb, Nb, and Ge, and E includes one or more elements of B, Si, N, S, F, Cl, and Br. The positive electrode plate satisfies:

$$0.002 \leq \frac{10 \times T}{d} \times w_{(Mn)} \times R \leq 0.2,$$

where $w_{(Mn)}$ is a mass fraction of Mn in the positive electrode active material layer; d is a thickness of the positive electrode active material layer, measured in mm; T is a weight of the positive electrode active material layer of the positive electrode plate in per unit area, measured in $g/cm^2$; and R is resistance of the positive electrode plate at 25°C, measured in $\Omega$. The "mass fraction" dimensions described in this application are all 1.

The inventors of this application have found that the layered positive electrode active material system $Li_aNi_bCo_cM_{1d}M_{2e}O_fR'_g$ has poor rate tolerance boundaries at low SOC, while the positive electrode active material $Li_{1+x}M_{3n}Mn_{1-y}A'_yP_{1-z}E_zO_4$ has a low-voltage discharge platform (generally not greater than 3.5 V) near the termination of discharge and mixing it with the foregoing layered positive electrode active material can allow a discharge platform to be present in an overall discharge curve of a mixed composite positive electrode active material near the termination of discharge by using the discharge platform of $Li_{1+x}M_{3n}Mn_{1-y}A'_yP_{1-z}E_zO_4$ at low voltage. When the battery is discharged to this platform, since the battery voltage changes little with the capacity, it is equivalent to performing a certain degree of constant voltage discharge on the layered positive electrode active material, thereby alleviating the polarization effect in the previous low voltage discharge process and improving the actual available capacity. In addition, the positive electrode active material system $Li_{1+x}M_{3n}Mn_{1-y}A'_yP_{1-z}E_zO_4$ is also limited by the poor rate tolerance boundaries at high SOC, and mixing it with the layered positive electrode active material system $Li_aNi_bCo_cM_{1d}M_{2e}O_fR'_g$ for use can compensate for the defects of the two systems, thereby broadening the rate tolerance boundaries at high and low SOCs, and enhancing the fast charge capability while the cycling performance is ensured. Additionally, the energy density of the positive electrode active material $Li_aNi_bCo_cM_{1d}M_{2e}O_fR'_g$ is higher, and the cycling performance and safety of the positive electrode active material $Li_{1+x}M_{3n}Mn_{1-y}A'_yP_{1-z}E_zO_4$ are higher. Mixing the two can further balance the high energy density and good cycling performance of the electrode plate, thereby extending the service life. Moreover, the lattice shrinkage rate of the positive electrode active material $Li_{1+x}M_{3n}Mn_{1-y}A'_yP_{1-z}E_zO_4$ during charge and discharge is relatively high, and mixing the positive electrode active materials of two systems also helps to further match the swelling of the negative electrode plate of the battery, improving the long-term performance of the battery.

Furthermore, the inventors have also found during exploration that mixing $Li_aNi_bCo_cM_{1d}M_{2e}O_fR'_g$ with $Li_{1+x}M_{3n}Mn_{1-y}A'_yP_{1-z}E_zO_4$ and controlling the percentage of element Mn in the positive electrode active material layer, the thickness and surface density of the positive electrode active material layer, and the resistance of the positive electrode plate within the above formula ranges can ensure the fast charge capability, energy density, and cycling performance, resulting in a fast charge positive electrode plate with long cycle life. The reasons for this may include but are not limited to: the coating weight of the positive electrode active material affects the effect of mixing $Li_aNi_bCo_cM_{1d}M_{2e}O_fR'_g$ with $Li_{1+x}M_{3n}Mn_{1-y}A'_yP_{1-z}E_zO_4$. For example, when the coating weight of the positive electrode active material layer is too low, the polarization of the electrode plate is significantly alleviated, and the improvement effect of mixing $Li_aNi_bCo_cM_{1d-}$

$M_{2e}O_fR'_g$ with $Li_{1+x}M_{3n}Mn_{1-y}A'_yP_{1-z}E_zO_4$. is not significant. However, when the coating weight of the active material layer is too high, the degree of polarization of the electrode plate increases beyond the improvement effect of mixing $Li_{1+x}M_{3n}Mn_{1-y}A'_yP_{1-z}E_zO_4$. Moreover, the surface density of the positive electrode active material layer is related to the thickness and compacted density thereof. When the surface density is determined, if the thickness of the positive electrode active material layer is too small, it indicates that the coating layer on the positive electrode plate is too thin or the compacted density is too high. The former affects the energy density, while the latter affects the infiltration of the electrolyte to the electrode plate, which deteriorates the cycling performance. If the thickness is too large, it indicates that the coating layer on the positive electrode plate is too thick or the compacted density is too low. The former increases the polarization of the electrode plate, deteriorating the performance of the battery, while the latter increases the contact resistance between particles inside the electrode plate, worsening the performance of the battery. In addition, too high resistance R of the positive electrode plate also affects the power and cycling performance.

In this application, the mass fraction $w_{(A')}$ of each element (such as element A' and element Mn) in the positive electrode active material layer can be obtained by performing calculation on the mass of the positive electrode active material layer and the mass of element A' in the positive electrode active material layer that are determined separately. The mass of the positive electrode active material layer can be obtained through disassembly and weighing ( (precise to 0.0001 g), and the mass of element A' in the positive electrode active material layer can be obtained through an ICP test. For example, the following operations can be performed. About 0.4 g of dry positive electrode plate (precise to 0.0001 g) or 0.1g of wet positive electrode plate (precise to 0.0001 g) are put into a 30 ml digestion vessel, and one digestion vessel with no sample is used as a blank sample. The digestion vessel containing the positive electrode plate sample is moved into a fume hood, with 12 ml of reverse aqua regia added. The reverse aqua regia is added along the inner wall of the digestion vessel, so that the residual sample on the inner wall is flushed to the bottom of the vessel. Then a top cover, a thermal insulation pad, a gasket, a microwave digestion apparatus, and a nut are installed in sequence, and the nut is tightened with a wrench. Then the microwave digestion instrument is turned on, an optical fiber sensor of the microwave digestion instrument is inserted at the bottom of the digestion vessel that has undergone assembly and that contains the sample, and the digestion vessel is horizontally placed in the microwave digestion instrument for digestion (digestion procedure: reach 120°C in 6 min and hold that temperature for 8 min, reach 160°C in 5 min and hold that temperature for 8 min, and reach 180°C in 5 min and hold that temperature for 5 min). After this, the digestion vessel is cooled to room temperature, taken out, and placed in the fume hood. The nut is slowly unscrewed for releasing gas, and the previously installed parts are uninstalled in sequence. The solution in the digestion vessel is transferred to a 100 ml volumetric flask through a funnel (with filter paper used), and then the digestion vessel is rinsed with ultrapure water. The rinsed solution is also transferred into the volumetric flask. Each rinse uses 10 ml of ultrapure water. The solution in the 100 ml volumetric flask is shaken to uniformity. A pipette is used to take 1 ml of the solution stirred to uniformity to add it to another 100 ml volumetric flask. Then ultrapure water is added to reach the volume (the total solution reaches 100 ml), and finally ICP-OES is used to test the sample solution. In preparing reverse aqua regia, 1000 ml of ultrapure water can be poured into a 2500 ml glass bottle, and then 750 ml of concentrated nitric acid and 250 ml of concentrated hydrochloric acid are added sequentially. They are stirred to uniformity and set aside. A commercial concentrated nitric acid solution with a mass fraction of 68% can be purchased to serve as the concentrated nitric acid, and a commercial concentrated hydrochloric acid solution with a mass fraction of 68% can be purchased to serve as the concentrated hydrochloric acid. Alternatively, mass proportions of hydrogen chloride gas and ultrapure water are 68% and 32% respectively, and the hydrogen chloride gas is added to the ultrapure water to obtain the required concentrated hydrochloric acid after complete dissolution.

In this application, the coating weight T of the active material layer of the positive electrode plate can be tested by weighing, specifically by weighing the positive electrode active material layer within a fixed area (precise to 0.0001 g).

In this application, the resistance of the positive electrode plate can be tested at room temperature using a BER1300 sheet resistance tester. The test steps can be as follows: (1) Prepare the electrode plate into a disc with a diameter of 22 mm. (2) Place the prepared disc on a test platform of the BER1300 tester. (3) Adjust the test pressure of the machine to 0.4 tons, the test time to 10 s, and start the test. The obtained resistance value is the sheet resistance.

In this application, the thickness d of the active material layer of the positive electrode plate can be tested according to the following method: A $1\times2$ $cm^2$ region in the center of the electrode plate is taken, and transferred to an argon ion beam milling (CP) device under vacuum transfer apparatus or inert atmosphere protection environment, to make a cross-section at low temperature. After cutting, it is attached to the sample stage with conductive tape and transferred to the SEM vacuum chamber for sample observation. The parameters are adjusted to appropriate values until the cross-sectional morphology can be clearly observed. Scanning electron microscope software is used to mark the thickness of the active material layer. Three regions are marked respectively, and the average value is taken as the thickness of the active material layer.

Furthermore, the inventors have found through in-depth research that on the basis of the positive electrode plate of this application satisfying the above conditions, the performance of the positive electrode plate can be further improved by controlling the mass fractions of elements in the positive electrode plate, the selection of the positive electrode active material, the resistance of the electrode plate, and the surface density and thickness of the positive electrode active material layer. That is, on the basis of meeting the above conditions, one or more of the following conditions can be optionally met.

In some embodiments of this application, the first positive electrode active material can be partially $Li_aNi_bCo_cM_{1d}M_{2e}O_fR'_g$ or can be completely $Li_aNi_bCo_cM_{1d}M_{2e}O_fR'_g$, where $0.75 \leq a \leq 1.2$, $0 < b < 1$, $0 < c < 1$, $0 < d < 1$, $0 \leq e \leq 0.2$, $1 \leq f \leq 2.5$, $0 < g \leq 1$, $f+g \leq 3$, $M_1$ is element Mn and/or element Al, $M_2$ includes one or more elements of Zr, Zn, Cu, Cr, Mg, Fe, V, Ti, Sr, Sb, Y, W, and Nb, and R' includes one or more elements of N, F, S, and Cl. Optionally, $0.5 \leq b < 1$, $0 < c \leq 0.5$, and $0 < d \leq 0.5$. Making the positive electrode active material $Li_aNi_bCo_cM_{1d}M_{2e}O_fR'_g$ meet the above given range conditions is more conducive to offering the electrode plate and battery with high energy density, good cycling performance, and long cycle life. In the positive electrode active material $Li_aNi_bCo_cM_{1d}M_{2e}O_fR'_g$, a nickel-cobalt-manganese ternary positive electrode active material (that is, NCM) system is used as an example. Increasing the nickel percentage can improve the volumetric energy density of the positive electrode material. Increasing the manganese percentage can reduce material costs, improve material safety and structural stability, and improve cycling performance, but a too high manganese percentage destroys the layered structure of the material, reducing the specific capacity of the material. Cobalt can stabilize the layered structure of the material and improve the cycling and rate performance of the material, but a too high cobalt percentage leads to a reduced actual capacity. Ensuring that the nickel, cobalt, and manganese percentages meet the above given range conditions helps to offer the electrode plate and the battery with high energy density, good rate performance, and cycling performance. Optionally, $M_1$ can be element Mn. The first positive electrode active material can be a positive electrode active material of the NCM system. In this case, its general formula can be $Li_aNi_bCo_cMn_dM_{2e}O_fR'_s$, such as a nickel-cobalt-manganese ternary layered positive electrode active material.

In some embodiments of this application, the second positive electrode active material can be partially $Li_{1+x}M_{3n}Mn_{1-y}A'_yP_{1-z}E_zO_4$ or completely $Li_{1+x}M_{3n}Mn_{1-y}A'_yP_{1-z}E_zO_4$, where $-0.100 \leq x \leq 0.100$, $0 \leq n \leq 1.1$, $0.001 \leq y \leq 1$, $0 \leq z \leq 0.100$, $M_3$ includes one or more elements of Zn, Al, Na, K, Mg, Nb, Mo, and W, A' includes one or more elements of Zn, Al, Na, K, Mg, Mo, W, Ti, V, Zr, Fe, Ga, Sn, Sb, Nb, and Ge, and E includes one or more elements of B, Si, N, S, F, Cl, and Br. Performing doping at least one of the lithium site, manganese site, and phosphorus site can help improve the performance of the positive electrode active material, such as improving interface performance, reducing interfacial side reactions with the electrolyte, lowering the anti-site defect concentration, enhancing kinetic performance and gram capacity of the material, and the like. In addition, adjusting the doping element at the manganese site can also improve the particle morphology and increase the compacted density. Specifically, the second positive electrode active material has a higher lattice volume change rate than the first positive electrode active material during charge, better matching volume swelling at the negative electrode during charge, but a too high lattice volume change rate of the positive electrode material is not conducive to lithium ion transport. Element A' doped at the manganese site being selected from the above elements helps to appropriately reduce the lattice change rate of the material during lithium intercalation and deintercalation, improve the structural stability of the positive electrode material, reduce dissolution of a manganese site element, and decrease the oxygen activity on the particle surface, thereby increasing the gram capacity of the material, reducing the interfacial side reactions of the material with electrolyte during use, enhancing the cycling performance of the material, and the like. Element E doped at the phosphorus site being selected from the above elements further helps to change the difficulty degree of changing the Mn-O bond length, thereby improving electronic conductivity, reducing the lithium ion migration barrier, promoting lithium ion migration, and enhancing the rate performance and fast charge performance. Similarly, element $M_3$ doped at the lithium site being selected from the above elements also helps to improve the lattice change rate of the material and maintain the capacity of the material. If the value of x is too small, the percentage of lithium of the entire core system decreases, which affects the gram capacity extraction of the material. The value of y limits the total amount of all doping elements, affecting the manganese amount in the system and the voltage platform of the material. Element E is doped at the phosphorus site. Because the P-O tetrahedron is relatively stable, a too large value of z affects the stability of the material. When x, y, and z are selected from the above ranges, the positive electrode active material can have better performance. Moreover, the selection of the above doping elements and the values of x, n, y, and z can also allow $Li_{1+x}M_{3n}Mn_{1-y}A'_yP_{1-z}E_zO_4$ to maintain electrical neutrality. Maintaining electrical neutrality can ensure that defects and impurity phases in the positive electrode active material are minimized. A positive electrode active material of the lithium manganese phosphate system is used as an example. If there is an excessive amount of transition metal (for example, manganese), due to the inherent stability of the material system, the excessive transition metal is likely to precipitate in elemental form or form impurity phases within a lattice. Maintaining electrical neutrality minimizes such impurity phases. Furthermore, maintaining electrical neutrality of the system can, in some cases, create lithium vacancies in the positive electrode active material, thereby allowing for better kinetic performance of the positive electrode active material. As compared with existing materials such as lithium manganese phosphate, lithium iron phosphate, and lithium manganese iron phosphate that can be applied to high voltage systems, this is more conducive to achieving better cycling performance and high-temperature stability, as well as larger specific capacity and higher compacted density. It can be understood that in the "manganese site" doping described in this application, the manganese site merely represents the position of element manganese or element A' in the lattice of the positive electrode active material $Li_{1+x}M_{3n}Mn_{1-y}A'_yP_{1-z}E_zO_4$, and does not necessarily mean that the manganese site contains element manganese. Element manganese at the manganese site can be partly or entirely replaced by element A'. For example, when the value of y is 1, the second positive electrode active material $Li_{1+x}M_{3n}Mn_{1-y}A'_yP_{1-z}E_zO_4$ does not contain element manganese. For instance, in this case, the manganese site may include element iron or include both element iron and another doping element.

In some embodiments of this application, in the second positive electrode active material $Li_{1+x}M_{3n}Mn_{1-y}A'_yP_{1-z}E_zO_4$, E may include one or more elements of B, Si, N, and S. Selecting element E for phosphorus site doping from the given range can further help change the difficulty degree of changing the Mn-O bond length, thereby improving electronic conductivity, reducing the lithium ion migration barrier, promoting lithium ion migration, and enhancing the rate performance and fast charge performance of the material.

In some embodiments of this application, in the second positive electrode active material $Li_{1+x}M_{3n}Mn_{1-y}A'_yP_{1-z}E_zO_4$, A' may include one or more elements of Fe, Ti, V, and Mg. Optionally, A' can be element Fe; more optionally, A' can be at least two elements selected from Fe, Ti, V, and Mg; and further optionally, A' can be element Fe and one or more elements selected from Ti, V, and Mg. Selecting element A' for manganese site doping from the given range can further improve the structural stability, gram capacity, cycling performance, rate performance, and the like of the positive electrode material, thereby obtaining a positive electrode plate with long cycle life and good fast charge performance.

In some embodiments of this application, in the second positive electrode active material $Li_{1+x}M_{3n}Mn_{1-y}A'_yP_{1-z}E_zO_4$, doping can be performed at both the manganese site and phosphorus site. This can not only effectively reduce dissolution of a manganese site element, thereby reducing manganese site ions migrating to the negative electrode, reducing the electrolyte consumed by SEI film breakdown, and improving the cycling performance and safety performance. This can also promote Mn-O bond adjustment, reduce the lithium ion migration barrier, promote lithium ion migration, and improve the rate performance and fast charge capability. More optionally, doping can also be performed at the lithium site, manganese site, and phosphorus site, further achieving significantly improved rate performance, improved cycling performance, and/or high-temperature stability.

In this application, for the chemical formula $Li_aNi_bCo_cM_{1d}M_{2e}O_fR'_g$ of the first positive electrode active material and the chemical formula $Li_{1+x}M_{3n}Mn_{1-y}A'_yP_{1-z}E_zO_4$ of the second positive electrode active material, unless otherwise specified, when a doping site has more than two elements, limitation on the value range of the stoichiometric number of an element at the corresponding doping site in the chemical formula is not only limitation for the stoichiometric number of each element at that site but also limitation for the sum of the stoichiometric numbers of all elements at that site. For example, the chemical formula of the second positive electrode active material $Li_{1+x}M_{3n}Mn_{1-y}A'_yP_{1-z}E_zO_4$ is used as an example. When $A_1'$ is more than two elements: $A_1', A_2'...A_n'$, the stoichiometric numbers $y_1, y_2...y_n$ of $A_1', A_2'...A_n'$ all must fall within the value range defined for y in this application, and the sum of $y_1, y_2...y_n$ must also fall within the value range. Similarly, in a case that $M_3$ or E is more than two elements, the limitation on the value ranges of the stoichiometric number of $M_3$ and E in this application also has the foregoing meaning.

In some embodiments of this application, the value range of $\dfrac{10 \times T}{d} \times w_{(A')} \times R$ is 0.002 to 0.2. For example, it can be 0.0025, 0.03, 0.04, 0.05, 0.06, 0.07, 0.08, 0.09, 0.1, 0.11, 0.12, 0.13, 0.14, 0.15, 0.16, 0.17, 0.18, 0.19, or within any range of the above values. Optionally, the value range of $\dfrac{10 \times T}{d} \times w_{(A')} \times R$ can be 0.07 to 0.1, more optionally 0.07 to 0.092, further optionally 0.07 to 0.9, and furthermore optionally 0.07 to 0.8. Further controlling the value of $\dfrac{10 \times T}{d} \times w_{(A')} \times R$ within the given range can further obtain a fast charge positive electrode plate with long cycle life.

In some embodiments of this application, $0.27 \leq \dfrac{w_{(A')}}{w_{(P)}} \leq 1.63$, where $w_{(A')}$ is the mass fraction of A' in the positive electrode active material layer, and $w_{(P)}$ is the mass fraction of phosphorus element P in the positive electrode active material layer. For example, the value of $\dfrac{w_{(A')}}{w_{(P)}}$ can be 0.3, 0.4, 0.5, 0.6, 0.7, 0.8, 0.9, 1.0, 1.1, 1.2, 1.3, 1.4, 1.5, 1.6, or in any range of the above values. Mixing $Li_aNi_bCo_cM_{1d}M_{2e}O_fR'_g$ with $Li_{1+x}M_{3n}Mn_{1-y}A'_yP_{1-z}E_zO_4$ is conducive to improving the power capability at lower voltage and the cycling performance of the composite positive electrode. As the mixing proportion of the two changes, the power capability at low voltage and high voltage, as well as the cycling performance of the composite positive electrode, also changes. For example, a too high mixing proportion of $Li_{1+x}M_{3n}Mn_{1-y}A'_yP_{1-z}E_zO_4$ affects the power capability at higher voltage, thereby deteriorating the power capability of the composite positive electrode. In this application, controlling $\dfrac{W_{(A)}}{W_{(P)}}$ within the given range is conducive to achieving an appropriate mixing ratio of $Li_aNi_bCo_cM_{1d}M_{2e}O_fR'_g$ and $Li_{1+x}M_{3n}Mn_{1-y}A'_yP_{1-z}E_zO_4$, thereby ensuring the good power capability and cycling performance of the composite positive electrode, and better balancing the fast charge performance and long

$$0.72 \le \frac{W_{(A)}}{W_{(P)}} \le 1.26$$

service life. Optionally, . Controlling $\dfrac{W_{(A)}}{W_{(P)}}$ within the given range can further optimize the mixing ratio of $Li_aNi_bCo_cM_{1d}M_{2e}O_fR'_g$ and $Li_{1+x}M_{3n}Mn_{1-y}A'_yP_{1-z}E_zO_4$, thereby obtaining a fast charge positive electrode plate with long cycle life.

In some embodiments of this application, the mass fraction of element A' in the positive electrode active material layer satisfies: $0.01 \le w_{(A')} \le 0.05$. For example, the value of $w_{(A')}$ can be 0.015, 0.02, 0.025, 0.03, 0.035, 0.04, 0.045, or in any range of the above values. In the second positive electrode active material, increasing the percentage of element A' helps improve the cycling performance, but a too high percentage damages the energy density. In this application, further controlling the mass fraction of A' in the positive electrode active material layer within the given range can further balance the cycling performance and high energy density on the basis of improving the fast charge performance of the positive electrode plate, thereby extending the service life.

In some embodiments of this application, the second positive electrode active material may include one or more of all positive electrode active materials that conform to the above general formula $Li_{1+x}M_{3n}Mn_{1-y}A'_yP_{1-z}E_zO_4$, such as the lithium manganese phosphate system, lithium iron phosphate system, and lithium manganese iron phosphate system. For example, the second positive electrode active material may include positive electrode active materials that meet at least one of the following two conditions: (i) $0.001 \le y \le 0.500$, and n=0, where in this case, the second positive electrode active material is $Li_{1+x}Mn_{1-y}A'_yP_{1-z}E_zO_4$, which means it can be lithium manganese phosphate with at least manganese site doping. In this application, modifying lithium manganese phosphate can significantly reduce dissolution of manganese site elements and reduce the lattice change rate. When used in secondary batteries, the modified lithium manganese phosphate is more conducive to improving the cycling performance, rate performance, safety performance, and increasing the capacity of batteries. For example, doping the compound $LiMnPO_4$ with a specific amount of a specific element at the lithium site, manganese site, and phosphorus site can offer improved rate performance, reduce dissolution of Mn and Mn site doping elements, and offer improved cycling performance and/or high-temperature stability. In addition, this increases the gram capacity and compacted density of the positive electrode active material. In a specific example, $Li_{1+x}Mn_{1-y}A'_yP_{1-z}E_zO_4$ may include $Li_{1+x}Mn_{1-y}Fe_yP_{1-z}E_zO_4$. As compared with lithium iron phosphate, lithium manganese iron phosphate has a higher voltage platform, and higher energy density under a same specific capacity. (ii) $0.001 \le y \le 0.500$, and $0.9 \le n \le 1.1$. In this case, the second positive electrode active material is $Li_{1+x}M_{3n}Mn_{1-y}A'_yP_{1-z}E_zO_4$. For the second positive electrode active material of the lithium manganese phosphate system, considering the value of y limits the total amount of all doping elements, if y is too small, that is, the doping amount is too small, the doping element cannot play its function. If y exceeds 0.5, it results in a lower Mn percentage in the system, affecting the voltage platform of the material. Therefore, the value range of y can optionally be 0.001 to 0.500, more optionally 0.25 to 0.5. It should be noted that in the chemical formulas $Li_{1+x}Mn_{1-y}A'_yP_{1-z}E_zO_4$ and $Li_{1+x}M_{3n}Mn_{1-y}A'_yP_{1-z}E_zO_4$ used in the above two conditions, the stoichiometric numbers of elements located at the same location can be the same or different, but all fall within the ranges defined for the stoichiometric numbers of the elements in the chemical formula $Li_{1+x}M_{3n}Mn_{1-y}A'_yP_{1-z}E_zO_4$.

In a specific example, the second positive electrode active material may include a positive electrode active material that satisfies the following conditions: $0.001 \le y \le 0.500$, and n=0, where the second positive electrode active material is $Li_{1+x}Mn_{1-y}A'_yP_{1-z}E_zO_4$. Optionally, the second positive electrode active material may include only a positive electrode active material with the chemical formula of $Li_{1+x}Mn_{1-y}A'_yP_{1-z}E_zO_4$. Optionally, A' may include element Fe. For example, it may be only element Fe.

In some embodiments of this application, the weight T (measured in $g/cm^2$) of the positive electrode active material layer per unit area of the positive electrode plate satisfies: $0.032 \le T \le 0.043$. For example, T can be 0.033, 0.034, 0.035, 0.036, 0.037, 0.038, 0.039, 0.040, 0.041, 0.042, or in any range of the above values. The coating weight of the positive electrode active material layer not only affects the polarization of the electrode plate but also affects the energy density of the electrode plate. In this application, by further controlling the surface density T of the positive electrode active material layer within the given range, while meeting the relation of the percentage of element A' in the positive electrode active material layer, the thickness and surface density of the positive electrode active material layer, and the resistance of the positive electrode plate, it is possible to further achieve improved fast charge performance and cycle life, as well as higher energy density, thereby extending the service life. Optionally, $0.035 \le T \le 0.039$. Further controlling T within the given range can further balance the fast charge capability and long service life of the positive electrode plate.

In some embodiments of this application, the thickness d (measured in mm) of the positive electrode active material layer satisfies: 0.11≤d≤0.16. For example, the value of d can be 0.115, 0.12, 0.125, 0.13, 0.135, 0.14, 0.145, 0.15, 0.155, or in any range of the above values. The thickness of the positive electrode active material layer not only affects the energy density of the battery but also affects its cycling performance and fast charge performance. In this application, under the premise that the relation of the percentage of element A' in the positive electrode active material layer, the thickness and surface density of the positive electrode active material layer, and the resistance of the positive electrode plate, further controlling the thickness d of the positive electrode active material layer within the given range can further achieve improved fast charge performance and cycle life, as well as high energy density, thereby extending the service life. Optionally, 0.12≤d≤0.14. Further controlling d within the given range can further balance the fast charge capability and long service life of the positive electrode plate.

In some embodiments of this application, the resistance R (measured in Ω) of the positive electrode plate satisfies: 0<R≤1.2. For example, the value of R can be 0.1, 0.2, 0.3, 0.4, 0.5, 0.6, 0.7, 0.8, 0.9, 1.0, 1.1, or in a range defined by any two of the above values. Considering that excessively high resistance of the positive electrode plate also affects the power performance and cycling performance of the battery, controlling the value range of R within the given range can further help the electrode plate have good fast charge performance and cycling performance. Optionally, 0<R≤1. Further controlling the value range of R within the given range can further reduce the internal resistance of the electrode plate, improving fast charge performance and cycling performance.

In some embodiments of this application, the mass fractions of element Mn and element A' in the positive electrode active material layer can also satisfy the following conditions: $3 \leq \dfrac{w_{(Mn)}}{w_{(A')}} \leq 20$, where $w_{(Mn)}$ is the mass fraction of manganese in the positive electrode active material layer. For example, the value of $\dfrac{w_{(Mn)}}{w_{(A')}}$ can be 4, 5, 6, 7, 8, 9, 10, 11, 12, 13, 14, 15, 16, 17, 18, 19, or in any range of the above values. The percentage of element A' in the second positive electrode active material affects the voltage platform and cycling performance of the material. A high percentage of element A' helps improve cycling performance, but significantly reduces the platform voltage, which is not conducive to the energy density of the battery. For example, in a specific example, when the manganese site contains both elements manganese and iron, a higher manganese-iron ratio can raise the voltage platform, which is conducive to improving the energy density of the battery. However, when the manganese-iron ratio is too high, a large amount of trivalent manganese in the delithiated state may destroy the solid solution structure, reducing the specific capacity and cycling capacity retention rate of the material, leading to deteriorated cycling performance and affecting the life of the positive electrode. In this application, controlling the value of $\dfrac{w_{(Mn)}}{w_{(A')}}$ within the given range can allow the second positive electrode active material to have an appropriate percentage range of element A', thereby further balancing the high energy density and good cycling performance on the basis of improving the fast charge capability, thereby extending the service life.

Optionally, $4 \leq \dfrac{w(Mn)}{w(A')} \leq 18$, more optionally $5 \leq \dfrac{w_{(Mn)}}{w_{(A')}} \dfrac{w(Mn)}{w(A')} \leq 17$, thereby further achieving high energy density, improved fast charge performance, and long service life.

In a specific example, the first positive electrode active material can be a positive electrode active material $Li_aNi_bCo_cMn_dM_{2e}O_fR'_g$ of the NCM system, such as $Li_aNi_bCo_cMn_dO_fR'_g$. The second positive electrode active material can be $Li_{1+x}Mn_{1-y}A'_yP_{1-z}E_zO_4$ (0.001≤y≤0.500), such as $Li_{1+x}Mn_{1-y}Fe_yP_{1-z}O_4$. In this case, the value range of $\dfrac{w_{(Mn)}}{w_{(A')}}$ can be 3 to 20, optionally 4 to 18, and more optionally 5 to 17. Furthermore, the value range of can be 0.27 to 1.63, optionally 0.72 to 1.26; and further, the value of $w_{(A')}$ can be 0.01 to 0.05. In this application, making the positive electrode plate meet the given conditions can further improve the fast charge performance, cycling performance, and long service life.

In some embodiments of this application, the positive electrode plate can satisfy the following two conditions: $5 \leq \dfrac{w_{(Mn)}}{w_{(A')}} \dfrac{w(Mn)}{w(A')} \leq 17$, and $0.02 \leq \dfrac{10 \times T}{d} \times w_{(Mn)} \times R \leq 0.085$, optionally, $0.03 \leq \dfrac{10 \times T}{d} \times w_{(Mn)} \times R \leq 0.085$. In the positive electrode active material layer, especially in the second positive electrode active material, changes in the percentage of element Mn and element A' directly or indirectly affect the fast charge capability and cycle life of the composite positive electrode. As the value of $\dfrac{w_{(Mn)}}{w_{(A)}}$ changes, the value range of

$$\frac{10 \times T}{d} \times w_{(Mn)} \times R$$

also changes accordingly. The inventors have found during exploration that the values of $\dfrac{w_{(Mn)}}{w_{(A)}}$

and $\dfrac{10 \times T}{d} \times w_{(Mn)} \times R$ both meeting the given ranges can further ensure that the composite positive electrode has good power capability and long cycle life.

In some embodiments of this application, the $D_v50$ particle size of the first positive electrode active material is 2.1 $\mu$m to 6.3 $\mu$m, for example, it can be 2.4 $\mu$m, 2.7 $\mu$m, 3.0 $\mu$m, 3.3 $\mu$m, 3.6 $\mu$m, 3.9 $\mu$m, 4.2 $\mu$m, 4.5 $\mu$m, 4.8 $\mu$m, 5.1 $\mu$m, 5.4 $\mu$m, 5.7 $\mu$m, 6.0 $\mu$m, or in a range defined by any two of the above values. The $D_v50$ of the first positive electrode active material refers to a particle size at which the cumulative volume distribution percentage of the first positive electrode active material reaches 50%. In this application, the $D_v50$ particle size of the first positive electrode active material can be measured through laser diffraction particle size analysis. For example, according to the standard GB/T 19077-2016, a laser particle size analyzer (for example, Malvern Master Size 3000) is used. Controlling the $D_v50$ particle size of the first positive electrode active material within the given range in this application is not only conducive to preventing breakage or pulverization during charge and discharge, thereby reducing the capacity loss, but also shortens the diffusion path of active ions and increases the electron conduction speed, which is beneficial to improving the cycling performance. In addition, this can further ensure that the active material has a suitable active site, so as to reduce or avoid an excessive number of active sites in a case of too small particle size, while such excessive number of active sites increases side reactions during cycling of the material, causing significant negative impact on the cycling performance. A too large particle size leads to a small number of active sites, causing significant negative impact on the power performance. Optionally, the $D_v50$ particle size of the first positive electrode active material can be 3.5 $\mu$m to 4.9 $\mu$m, and this can further balance the high energy density and good power performance and cycling performance, thereby improving the fast charge capability and service life.

In some embodiments of this application, the $D_v50$ particle size of the second positive electrode active material may be 0.21 $\mu$m to 1.53 $\mu$m. For example, it can be 0.25 $\mu$m, 0.3 $\mu$m, 0.4 $\mu$m, 0.5 $\mu$m, 0.6 $\mu$m, 0.7 $\mu$m, 0.8 $\mu$m, 0.9 $\mu$m, 1.0 $\mu$m, 1.1 $\mu$m, 1.2 $\mu$m, 1.3 $\mu$m, 1.4 $\mu$m, 1.5 $\mu$m, or in a range defined by any two of the above values. The $D_v50$ of the second positive electrode active material refers to a particle size at which the cumulative volume distribution percentage of the second positive electrode active material reaches 50%. In this application, the $D_v50$ particle size of the second positive electrode active material can be measured through laser diffraction particle size analysis. For example, according to the standard GB/T 19077-2016, a laser particle size analyzer (for example, Malvern Master Size 3000) is used. Controlling the $D_v50$ particle size of the second positive electrode active material within the given range in this application not only is conducive to preventing breakage or pulverization during charge and discharge, thereby reducing the capacity loss of the battery, but also can shorten the diffusion path of active ions and increase the electron conduction speed, which is beneficial to improving the cycling performance. In addition, this can also ensure that the active material has suitable active sites, and balance cycling performance and power performance. Additionally, controlling the $D_v50$ particle size of the second positive electrode active material within the given range is beneficial to helping the $D_v50$ particle size range of the first positive electrode active material to offer a desired compacted density, avoiding large gaps between the positive electrode active material particles. Optionally, the $D_v50$ particle size of the second positive electrode active material can be 0.5 $\mu$m to 0.9 $\mu$m, and this can further balance the high energy density and good cycling performance and power performance, thereby improving the fast charge capability and service life.

In some embodiments of this application, the specific surface area of the first positive electrode active material may be 0.3 m$^2$/g to 1.2 m$^2$/g. For example, it can be 0.4 m$^2$/g, 0.5 m$^2$/g, 0.6 m$^2$/g, 0.7 m$^2$/g, 0.8 m$^2$/g, 0.9 m$^2$/g, 1.0 m$^2$/g, 1.1 m$^2$/g, or in a range defined by any two of the above values. Optionally, the specific surface area of the first positive electrode active material may be 0.5 m$^2$/g to 0.9 m$^2$/g. Furthermore, the specific surface area of the second positive electrode active material can be 9.2 m$^2$/g to 23.6 m$^2$/g. For example, it can be 10 m$^2$/g, 11 m$^2$/g, 12 m$^2$/g, 13 m$^2$/g, 14 m$^2$/g, 15 m$^2$/g, 16 m$^2$/g, 17 m$^2$/g, 18 m$^2$/g, 19 m$^2$/g, 20 m$^2$/g, 21 m$^2$/g, 22 m$^2$/g, 23 m$^2$/g, or in any range of the above values. Optionally, the specific surface area of the second positive electrode active material is 10.5 m$^2$/g to 19.6 m$^2$/g, more optionally 12.0 m$^2$/g to 16.2 m$^2$/g, further optionally 10.0 m$^2$/g to 21.5 m$^2$/g, and furthermore optionally 10.9 m$^2$/g to 17.6 m$^2$/g. In this application, the specific surface areas of the first and second positive electrode active materials can be measured using conventional methods in the art, such as the nitrogen physical adsorption method. Increasing the specific surface area helps to increase the active sites of the positive electrode active material, making the material have better power performance. However, these increased active sites also increase side reactions of the positive electrode active material during cycling, causing the cycling performance of the material to decay. In this application, controlling the specific surface areas of the first positive electrode active material and second positive electrode active material within the given range can further offer good power performance and cycle life and improve the fast charge capability and service life.

In a specific example, when $\dfrac{W_{(Mn)}}{W_{(A')}}$ in the positive electrode active material layer satisfies $3 \leq \dfrac{W_{(Mn)}}{W_{(A')}} \leq 20$, the $D_v50$ particle size of the second positive electrode active material can be 0.21 $\mu$m to 1.53 $\mu$m, and the specific surface area thereof can be 9.2 m$^2$/g to 23.6 m$^2$/g. Furthermore, when $\dfrac{W_{(Mn)}}{W_{(A')}}$ satisfies $4 \leq \dfrac{W_{(Mn)}}{W_{(A')}} \dfrac{w(Mn)}{w(A')} \leq 18$, the $D_v50$ particle size of the second positive electrode active material can be 0.38 $\mu$m to 1.10 $\mu$m, optionally 0.47 $\mu$m to 0.91 $\mu$m. In this case, the specific surface area of the second positive electrode active material can be 10.5 m$^2$/g to 19.9 m$^2$/g, optionally 12.0 m$^2$/g to 16.2 m$^2$/g. Furthermore, when $\dfrac{W_{(Mn)}}{W_{(A')}}$ satisfies $5 \leq \dfrac{W_{(Mn)}}{W_{(A')}} \dfrac{w(Mn)}{w(A')} \leq 17$, the $D_v50$ particle size of the second positive electrode active material can be 0.32 $\mu$m to 1.40 $\mu$m, optionally 0.41 $\mu$m to 1.25 $\mu$m. In this case, the specific surface area of the second positive electrode active material can be 10.0 m$^2$/g to 21.5 m$^2$/g, optionally 10.9 m$^2$/g to 17.6 m$^2$/g. The inventors also found during the exploration process that changes in the $D_v50$ particle size and specific surface area of the second positive electrode active material affect the power performance and cycle life of the material, and the optimal ranges of $D_v50$ particle size and specific surface area corresponding to different $\dfrac{W_{(Mn)}}{W_{(A')}}$ are also different.

Making $\dfrac{W_{(Mn)}}{W_{(A')}}$, the $D_v50$ particle size and specific surface area of the second positive electrode active material meet the given range conditions can further allow the composite positive electrode to have good power capability and long cycle life.

In some embodiments of this application, a surface of the first positive electrode active material can be provided with a first coating layer, and optionally, the first coating layer may include one or more elements of Ti, Al, B, Nb, Zr, Si, and W. Disposing a coating layer on the surface of the positive electrode active material can not only avoid contact between the positive electrode active material and the electrolyte, thereby reducing side reactions between the positive electrode active material and the electrolyte, but also improve the structural stability of the positive electrode active material, thereby enhancing the cycle stability performance and safety of the material. In addition, the foregoing elements in the first coating layer can be provided in a form of oxide (such as Al$_2$O$_3$, ZrO$_2$, TiO$_2$, or Nb$_2$O$_3$) or in a form of lithium compound or the like. The inclusion of the given element range in the first coating layer can enhance the ionic conductivity on the surface of the material, improve the rate performance and gram capacity extraction of the material, stabilize the material structure, avoid direct contact between the material and the electrolyte, and improve cycling performance.

In some embodiments of this application, the thickness of the first coating layer can be 20 nm to 150 nm, for example, it can be 30 nm, 40 nm, 50 nm, 60 nm, 70 nm, 80 nm, 90 nm, 100 nm, 110 nm, 120 nm, 130 nm, 140 nm, or in a range defined by any two of the above values. The inventors have found that when the first coating layer is too thin, the possibility of it breaking/being deeply damaged during the use of the positive electrode active material increases, significantly reducing its effects in enhancing the performance of and protecting the first positive electrode active material. When the first coating layer is too thick, lithium ions need a longer transmission path to reach the active material system from the electrolyte, causing great impact on the performance of the active material. Additionally, during the sintering of the coating layer, the coating material reacts with the lithium in the internal material, reducing the available active lithium in the material, and consequently reducing the gram capacity of the material. In this application, controlling the thickness of the first coating layer within the given range can effectively avoid or reduce the above problems, thereby effectively improving the rate performance of the first positive electrode active material, and stabilizing the surface structure of the material. Meanwhile, based on the $D_v50$ particle size of the first positive electrode active material, controlling the thickness of the first coating layer within the given rang is also conducive to further ensuring the high energy density of the composite positive electrode.

In some embodiments of this application, the surface of the second positive electrode active material can be provided with a second coating layer. The provision of the second coating layer can not only avoid contact between the second positive electrode active material and the electrolyte, thereby reducing side reactions between the second positive electrode active material and the electrolyte, but also avoid or inhibit dissolution of transition metals or doping elements in the second positive electrode active material, improving the structural stability thereof, thereby enhancing the cycling stability performance and safety of the positive electrode active material. Optionally, the second coating layer may include at least one of pyrophosphate, phosphate, and carbon. Metal ions are difficult to migrate in pyrophosphate. Selecting pyrophosphate as the coating layer material can effectively isolate the doping metal ions in the positive electrode material from the electrolyte. Further, pyrophosphate can optionally be crystalline pyrophosphate. The crystalline pyrophosphate has a stable structure, and as a coating layer material, can effectively inhibit dissolution of transition metals in the active material, thereby improving cycling performance. Phosphate coating can improve the ion transport performance of the positive electrode material, facilitating the transport of lithium ions. Furthermore, phosphate can be crystalline phosphate. Crystalline phosphate and crystalline pyrophosphate have a highly matched lattice, good stability, and have excellent lithium ion conductivity. Therefore, applying them onto the second positive electrode active material can improve the stability of the positive electrode active material, and effectively reduce interfacial side reactions of the electrolyte, thereby improving the high-temperature cycle and storage performance of the battery. Carbon coating can effectively improve the conductivity and desolvation capability of the positive electrode active material. Carbon materials have good electronic conductivity. An electrochemical reaction occurs during application of the battery, which requires the participation of electrons. Therefore, to promote the electron transfer between particles and the electron transfer at different positions on the particles, carbon with excellent electrical conductivity can be used for coating the positive electrode active material. It can be understood that when the second coating layer includes pyrophosphate, phosphate, and carbon, pyrophosphate, phosphate, and carbon can be located at a same coating layer or at least two coating sub-layers. For example, a pyrophosphate coating layer, a phosphate coating layer, and a carbon coating layer can be sequentially formed on the surface of the second positive electrode active material, or a phosphate coating layer, a pyrophosphate coating layer, and a carbon coating layer can be sequentially formed on the surface of the second positive electrode active material, or a composite coating layer of pyrophosphate and phosphate can be first formed on the surface of the second positive electrode active material, and then a carbon coating layer can be formed on the surface of the composite coating layer.

In some embodiments of this application, the thickness of the second coating layer can be 10 nm to 50 nm. For example, it can be 15 nm, 20 nm, 25 nm, 30 nm, 35 nm, 40 nm, 45 nm, or in a range defined by any two of the above values. Controlling the thickness of the second coating layer within the given range can not only effectively hinder the dissolution of transition metals or doping elements in the second positive electrode active material, and reduce the lattice change rate of the second positive electrode active material, but also prevent the thickness of the coating from being too large, where such large thickness affects lithium ion migration and energy density of the battery. As a result, it is possible to further improve the kinetic performance, cycling performance, and safety of the battery without sacrificing the gram capacity of the second positive electrode active material.

In a specific example, the second coating layer may include a first sub-coating layer, a second sub-coating layer, and a third sub-coating layer. The first sub-coating layer can cover the second positive electrode active material and include crystalline pyrophosphate. The second sub-coating layer may include crystalline phosphate and cover the first sub-coating layer. The third sub-coating layer can be carbon and cover the second sub-coating layer. Pyrophosphate, as the first sub-coating layer, can effectively isolate the doping metal ions in the second positive electrode active material from the electrolyte. Crystalline pyrophosphate coating can effectively inhibit the dissolution of transition metals in the second positive electrode active material, improving cycling performance. Crystalline phosphate, as the second sub-coating layer, has a high lattice match with the crystalline pyrophosphate in the first sub-coating layer, is more stable than pyrophosphate, and has excellent lithium ion conductivity. It helps to improve the stability of the positive electrode active material and reduce the interfacial side reactions of the positive electrode active material and electrolyte. The third sub-coating layer can enhance electron transfer between particles, improve the electronic conductivity of the positive electrode active material, and effectively improve the conductivity and desolvation capability of the positive electrode active material. Furthermore, the thickness of the first sub-coating layer can be 1 nm to 10 nm, for example, 3 nm, 4 nm, 5 nm, 6 nm, 7 nm, 8 nm, 9 nm, or in any range defined by any value of the foregoing values. The thickness of the first sub-coating layer falling within the given range can avoid possible negative impact caused by a too large thickness on the kinetic performance of the positive electrode active material, and can prevent the possible issue of not effectively hindering migration of transition metal ions caused by a too small thickness. The thickness of the second sub-coating layer can be 2 nm to 15 nm, for example, 3 nm, 4 nm, 5 nm, 6 nm, 7 nm, 8 nm, 9 nm, 10 nm, 11 nm, 12 nm, 13 nm, 14 nm, or in any range defined by any value of the foregoing value. The thickness of the second sub-coating layer being too large may affect the overall platform voltage of the positive electrode active material. When the second sub-coating layer has a thickness within the given range, its surface structure is stable, and the side reactions with the electrolyte are small, effectively alleviating interfacial side reactions, thereby enhancing the high-temperature cycling performance and high-temperature storage performance of the battery. The thickness of the third sub-coating layer can be 2 nm to 25 nm, for example, 4 nm, 6 nm, 8 nm, 10 nm, 12 nm, 14 nm, 16 nm, 18 nm, 20 nm, 22 nm, 24 nm, or in any range defined by any value of the foregoing values. The thickness of the third sub-coating layer falling within the given range can enhance the conductivity of the positive electrode active material, increase the compacted density of the positive electrode plate, and avoid the issue of an excessively large coating thickness affecting the compacted density of the electrode plate when the sub-coating layer contains amorphous carbon.

In this application, the thickness of each coating layer can be measured through FIB, and the specific method may include the following steps: randomly selecting a single particle from the positive electrode active material powder to be tested, cutting a thin slice with a thickness of about 100 nm from the middle of the selected particle or near the middle, and performing TEM test on the thin slice to measure the thickness of the coating layer where the measurement is performed for 3 to 5 positions and an average value is taken.

A second aspect of this application provides a secondary battery including the positive electrode plate in the first aspect of this application.

A secondary battery usually includes a housing assembly, a positive electrode plate, a negative electrode plate, a separator, and an electrolyte. The positive electrode plate, the negative electrode plate, the separator, and the electrolyte are located in an accommodating cavity formed by the housing assembly. Depending on the type of battery, the housing assembly can be an aluminum-plastic film or a metal housing assembly. The metal housing assembly may further include a rectangular housing assembly and a cylindrical housing assembly. When the housing assembly is a metal housing assembly, it typically further includes a housing with an opening on at least one side and a cover for sealing the opening. Regardless of the type of the battery, as long as its positive electrode plate includes the positive electrode plate of the first aspect of this application, it can be considered to fall within the technical scope of the battery of the fourth aspect of this application. In addition to the features of the active material of the positive electrode plate and the compacted density of the active material layer mentioned above, other structural features or material choices of the positive electrode plate, as well as the selection of the negative electrode plate, the separator, and the electrolyte can be chosen in a conventional way in the art. Those skilled in the art can flexibly make a choice depending on actual needs.

In some embodiments of this application, the secondary battery can be either a laminated battery or a wound battery. The wound battery can be a prismatic battery or a cylindrical battery. Optionally, the battery can be a cylindrical battery. Depending on the type of battery, the positive electrode plate, negative electrode plate, and separator can be stacked to form a laminated cell, or they can be stacked and then wound to form a wound body.

In some embodiments of this application, the battery can be a single cell or a battery module assembled from multiple cells. Multiple cells can be included in the battery module, and the specific number can be adjusted according to the application and capacity of the battery module. Furthermore, the battery module may further include a packaging assembly with an accommodating space. The packaging assembly may include a bottom plate, side plates, a cover plate, and the like.

In some embodiments of this application, the battery modules may be further assembled into a battery pack, and a quantity of battery modules included in the battery pack may be adjusted based on application and capacity of the battery pack.

Additionally, this application further provides an electric apparatus that includes: the positive electrode plate according to the first aspect of this application and/or the secondary battery according to the second aspect of this application.

The secondary battery, such as a cell, battery module, or battery pack, can be used as a power source of the electric apparatus or as an energy storage unit of the electric apparatus. The electric apparatus may include but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system. In a specific example, the electric apparatus can be a vehicle.

The electric apparatus can choose the specific type of battery according to its usage need. For example, it may choose cells, battery modules, or battery packs.

In an example, the electric apparatus may be a battery electric vehicle, a hybrid electric vehicle, a plug-in hybrid electric vehicle, or the like. To satisfy a requirement of the electric apparatus for high power and high energy density of the battery, a battery pack or a battery module may be used.

In another example, the electric apparatus may be a mobile phone, a tablet computer, or a notebook computer, or the like. Such electric apparatus is generally required to be light and thin and may use a battery cell as its power source.

The following describes examples of this application. The examples described below are illustrative and only used for explaining this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

**Preparation and testing method of the secondary battery:**

1. Laminated soft pouch battery:

(1) Preparation of positive electrode plate:

A positive electrode active material, polyvinylidene fluoride (PVDF), and conductive carbon were added to a certain amount of N-methyl-2-pyrrolidone (NMP), with the mass ratio of the positive electrode active material, polyvinylidene fluoride and conductive carbon being 90:5:5. The substances were stirred in a drying room to make a uniform slurry, with the viscosity controlled to 3000 mPa·S to 10000 mPa·S. The slurry was applied onto an aluminum foil, followed by drying to make a positive electrode plate.

(2) Preparation of negative electrode plate:

Graphite, sodium carboxymethyl cellulose (CMC), styrene-butadiene rubber (SBR), and conductive carbon were added to a certain amount of deionized water, with the mass ratio of the graphite, sodium carboxymethyl cellulose, styrene-butadiene rubber, and conductive carbon being 90:2:3:5. The substances were stirred to make a uniform slurry, with the viscosity controlled to 3000 mPa·S to 10000 mPa·S. The slurry was applied onto a copper foil, followed by drying to make a negative electrode plate.

(3) Preparation of laminated soft pouch battery:

The prepared positive electrode plate, the negative electrode plate, and a separator (porous polymer film of polyethylene (PE)) were made into a corresponding cell in a Z-shaped laminated structure. The cell was vacuum dried at 90°C for 12 h. Then ultrasonic welding was performed to weld positive and negative electrode tabs, with an aluminum tab at the positive electrode and a nickel tab at the negative electrode, and the positive and negative electrode tabs were located on the same side of the cell. The cell welded with the tabs was put into an aluminum-plastic film of an appropriate size for top-side packaging, with a conventional packaging temperature of 145°C. The electrolyte (the electrolyte used was made of 1 mol/L $LiPF_6$/(ethylene carbonate (EC) + diethyl carbonate (DEC) + dimethyl carbonate (DMC)) (at a volume ratio of 1:1:1) + 5wt% fluoroethylene carbonate (FEC)) was injected. Standing, formation, aging, degassing, secondary sealing, and capacity testing were performed to obtain a prepared laminated soft pouch battery.

2. Perform cycling test on the laminated soft pouch battery prepared at 25°C:

In a constant temperature environment of 25°C, and at 2.5 V to 4.4 V, the prepared laminated soft pouch battery was charged to 4.4 V at $0.5C_0$, charged at a constant voltage of 4.4 V to a current of less than or equal to $0.05C_0$, left standing for 5 min, and discharged at $1C_0$ to 2.5 V The capacity was recorded as $C_n$ (n=1,2,3...). The above operation was repeated, and the capacity retention rate was calculated according to the ratio of $C_n/C_3$. When $C_n/C_3 \times 100\% = 80\%$, the corresponding number of cycles was used as an indicator of cycling capacity.

3. Test for sheet resistance of positive electrode plate:

The sheet resistance was tested using a BER1300 sheet resistance tester. The test steps were as follows: (a) The electrode plate was prepared into a disc with a diameter of 22 mm. (b) The prepared disc was placed on a test platform of the BER1300 tester. (c) The test pressure of the machine was adjusted to 0.4 T, the test temperature was 25°C, the test time was adjusted to 10 s, and then the test was started. The obtained resistance value was the sheet resistance.

4. Test for 10% to 80% SOC charge time:

First, a capacity test was performed on the laminated soft pouch battery in the following procedure: The battery was charged at a constant current of 0.33C rate to a full charge voltage V1, and then charged at a constant voltage. When the charge current decreased to 0.05C, the constant voltage charge was ended. Then, the battery was discharged at 0.33C to a full discharge voltage V2. This process was repeated 3 times, and the capacity result of the 3rd time was taken as the final result. The result for the third time could also be used to calculate the gram capacity of the positive electrode.

The charge test was performed on the laminated soft pouch battery at different rates ($C_1 < C_2 < C_3 < C_4 < ... < C_n$). The charge rates in the test needed to be arranged in an ascending order. The voltage of the whole laminated soft pouch battery and the negative electrode voltage of the laminated soft pouch battery were both monitored during charge. The detailed process was as follows: The laminated soft pouch battery was charged at $C_1$ to the full charge voltage V1 or until the negative electrode voltage was 0 V The SOC value of the battery at the termination of charge was extracted, and then the battery was discharged at 0.33C to the full discharge voltage V2. This process was repeated to obtain SOC values under different rates at the termination of charge. The SOCs and rates at the termination of charge were plotted as a scatter plot, and fitting was performed to obtain the relation between the SOCs and rates at the termination of charge. The corresponding rates ($C_{20\%}$, $C_{30\%}$, $C_{40\%}$, $C_{50\%}$, $C_{60\%}$, $C_{70\%}$, and $C_{80\%}$) were obtained by substituting 20%, 30%, 40%, 50%, 60%, 70%, and 80% into the relation. The 10% to 80% SOC charge time was then calculated: 10% to 80% SOC charge time = $(60/C_{20\%} + 60/C_{30\%} + ... + 60/C_{80\%}) \times 10\%$.

**Example 1**

In the laminated soft pouch battery:

(i) Positive electrode plate: The layer count of the positive electrode plate was 15; the thickness of a single layer of positive electrode plate was 0.13 mm; the weight of the positive electrode active material layer of the positive electrode plate per unit area was 0.038 $g/cm^2$; the first positive electrode active material was NCM523; the $D_v50$ particle size of the first positive electrode active material was 4.2 $\mu$m; the specific surface area of the first positive electrode active material was 0.5 $m^2/g$, the second positive electrode active material was $LiMn_{0.6}Fe_{0.4}PO_4$; the $D_v50$ particle size of the second positive electrode active material was 0.8 $\mu$m; the specific surface area of the second positive electrode active material was 13.3 $m^2/g$; and the positive electrode plate satisfied: $\dfrac{10 \times T}{d} \times w_{(Mn)} \times R = 0.085$, A' being Fe, $\dfrac{W_{(Mn)}}{W_{(Fe)}} = 5$, and the resistance of the electrode plate being 0.7 $\Omega$.

(ii) Negative electrode plate: The layer count of the negative electrode plate was 16, the thickness of a single layer of negative electrode plate was 0.13 mm, and the weight of the negative electrode active material layer of the negative electrode plate per unit area was 0.012 $g/cm^2$ to 0.030 $g/cm^2$.

(iii) Separator: The layer count of the separator was 16, and the thickness of a single layer of separator was 0.012 mm.

(iv) The inner cavity thickness of the battery housing was 6.1 mm.

(v) The electrolyte injection coefficient of the secondary battery was 2.84 g/Ah.

**Examples 2 to 15 and Comparative Examples 1 to 3**

Examples 1 to 9 and Comparative Examples 1 to 3 differed from Example 1 in that the values of $\dfrac{W_{(Mn)}}{W_{(Fe)}}$ of the positive electrode plates were different. This difference was achieved by changing the mixing ratio of the first positive electrode active material and the second positive electrode active material. See Table 1 for details.

Examples 10 to 15 differed from Example 1 in that the types of the second positive electrode active materials were different. See Table 1 for details.

Tests were conducted on the batteries assembled in Examples 1 to 15 and Comparative Examples 1 to 3. The test results are detailed in Table 1.

**Table 1 Differences and relevant test results of Examples 1 to 15 and Comparative Examples 1 to 3**

| | Positive electrode plate | | | | | Number of cycles corresponding to $C_n/C_3$=80% | 10% to 80% SOC charge time |
|---|---|---|---|---|---|---|---|
| | First positive electrode active material | Second positive electrode active material | $\dfrac{W_{(Mn)}}{W_{(Fe)}}$ | Electrode plate resistance R ($\Omega$) | $\dfrac{10\times T}{d}\times w_{(Mn)}\times R$ | | |
| Example 1 | NCM523 | $LiMn_{0.6}Fe_{0.4}PO_4$ | 5 | 0.7 | 0.085 | 1331 | 21 min |
| Example 2 | NCM523 | $LiMn_{0.6}Fe_{0.4}PO_4$ | 3 | 0.9 | 0.134 | 724 | 31 min |
| Example 3 | NCM523 | $LiMn_{0.6}Fe_{0.4}PO_4$ | 4 | 0.8 | 0.123 | 899 | 27 min |
| Example 4 | NCM523 | $LiMn_{0.6}Fe_{0.4}PO_4$ | 9 | 0.6 | 0.06 | 1267 | 21 min |
| Example 5 | NCM523 | $LiMn_{0.6}Fe_{0.4}PO_4$ | 11 | 0.5 | 0.054 | 1203 | 20 min |
| Example 6 | NCM523 | $LiMn_{0.6}Fe_{0.4}PO_4$ | 15 | 0.4 | 0.03 | 1190 | 18 min |
| Example 7 | NCM523 | $LiMn_{0.6}Fe_{0.4}PO_4$ | 17 | 0.3 | 0.02 | 942 | 24 min |
| Example 8 | NCM523 | $LiMn_{0.6}Fe_{0.4}PO_4$ | 18 | 0.1 | 0.017 | 912 | 26 min |
| Example 9 | NCM523 | $LiMn_{0.6}Fe_{0.4}PO_4$ | 20 | 0.1 | 0.002 | 907 | 30 min |
| Comparative Example 1 | NCM523 | $LiMn_{0.6}Fe_{0.4}PO_4$ | 2 | 1.1 | 0.2 | 871 | 30 min |
| Comparative Example 2 | NCM523 | $LiMn_{0.6}Fe_{0.4}PO_4$ | 25 | 0.1 | 0.001 | 544 | 35 min |
| Comparative Example 3 | NCM523 | $LiMn_{0.6}Fe_{0.4}PO_4$ | 1 | 1.2 | 0.25 | 305 | 38 min |
| Example 10 | NCM523 | $LiMn_{0.8}Fe_{0.2}PO_4$ | 10 | 0.6 | 0.012 | 832 | 27 min |
| Example 11 | NCM523 | $LiMn_{0.9}Fe_{0.1}PO_4$ | 10 | 0.8 | 0.016 | 853 | 30 min |
| Example 12 | NCM523 | $LiMn_{0.4}Fe_{0.6}PO_4$ | 10 | 0.4 | 0.024 | 932 | 23 min |
| Example 13 | NCM523 | $LiMn_{0.3}Fe_{0.7}PO_4$ | 10 | 0.3 | 0.028 | 925 | 25 min |
| Example 14 | NCM523 | $LiMn_{0.5}Fe_{0.5}PO_4$ | 10 | 0.4 | 0.025 | 1016 | 23 min |
| Example 15 | NCM523 | $LiMn_{0.2}Fe_{0.8}PO_4$ | 10 | 0.3 | 0.024 | 834 | 26 min |

Results and conclusions:

It can be seen from the foregoing examples and comparative examples that using the battery design solution of this application can improve the fast charge performance and cycling performance of batteries. Specifically, it can be seen from Examples 1 to 9 and Comparative Examples 1 to 3 that, with the first positive electrode active material and the second positive electrode active material determined, as the mixing ratio of the two changes, the resistance of the positive electrode plate, the percentage of element Mn in the electrode plate, and the relative ratio of element Mn to element A' (element Fe in the above examples), as well as the value of $\dfrac{10 \times T}{d} \times w_{(Mn)} \times R$ changes accordingly. It can be seen from Example 1 and Examples 10 to 15 that, a change in the type of the second positive electrode active material also affects the resistance of the positive electrode plate, the percentage of element Mn in the electrode plate, and the relative ratio of element Mn to element A' (element Fe in the above examples), as well as the value of $\dfrac{10 \times T}{d} \times w_{(Mn)} \times R$.

However, in general, when the value range of $\dfrac{10 \times T}{d} \times w_{(Mn)} \times R$ is within 0.002 to 0.2, the fast charge performance and cycling performance of the battery are relatively better, optionally 0.03 to 0.085. On this basis, the relative ratio $\dfrac{w_{(Mn)}}{w_{(Fe)}}$ of element Mn and element Fe in the positive electrode plate is optionally 3 to 20, more optionally 5 to 17.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this application. They should all be covered in the scope of claims and summary in this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A positive electrode plate, wherein the positive electrode plate comprises a positive electrode active material layer, and the positive electrode active material layer comprises a first positive electrode active material and a second positive electrode active material; wherein

   the first positive electrode active material comprises $Li_a Ni_b Co_c M_{1d} M_{2e} O_f R'_g$, wherein $0.75 \leq a \leq 1.2$, $0 < b < 1$, $0 < c < 1$, $0 < d < 1$, $0 \leq e \leq 0.2$, $1 \leq f \leq 2.5$, $0 < g \leq 1$, $f + g \leq 3$, $M_1$ is element Mn and/or element Al, $M_2$ comprises one or more elements of Zr, Zn, Cu, Cr, Mg, Fe, V, Ti, Sr, Sb, Y, W, and Nb, and R' comprises one or more elements of N, F, S, and Cl; the second positive electrode active material comprises $Li_{1+x} M_{3n} Mn_{1-y} A'_y P_{1-z} E_z O_4$, wherein $-0.100 \leq x \leq 0.100$, $0 \leq n \leq 1.1$, $0.001 \leq y \leq 0.500$, $0 \leq z \leq 0.100$, $M_3$ comprises one or more elements of Zn, Al, Na, K, Mg, Nb, Mo, and W, A' comprises one or more elements of Zn, Al, Na, K, Mg, Mo, W, Ti, V, Zr, Fe, Ga, Sn, Sb, Nb, and Ge, and E comprises one or more elements of B, Si, N, S, F, Cl, and Br; and the positive electrode plate satisfies

   $$0.002 \leq \dfrac{10 \times T}{d} \times w_{(Mn)} \times R \leq 0.2,$$

   wherein

   $w_{(Mn)}$ is a mass fraction of Mn in the positive electrode active material layer; d is a thickness of the positive electrode active material layer, measured in mm; T is a weight of the positive electrode active material layer of the positive electrode plate in per unit area, measured in $g/cm^2$; and

R is resistance of the positive electrode plate at 25°C, measured in Ω.

2. The positive electrode plate according to claim 1, wherein $0.27 \leq \dfrac{w_{(A')}}{w_{(P)}} \leq 1.63$, optionally, $0.72 \leq \dfrac{w_{(A')}}{w_{(P)}} \leq 1.26$, wherein $w_{(A')}$ is a mass fraction of A' in the positive electrode active material layer, and $w_{(P)}$ is a mass fraction of P in the positive electrode active material layer.

3. The positive electrode plate according to claim 1 or 2, wherein $0.01 \leq w_{(A')} \leq 0.05$.

4. The positive electrode plate according to any one of claims 1 to 3, wherein the second positive electrode active material comprises at least one of the following two positive electrode active materials:

   (i) $0.001 \leq y \leq 0.500$, and n=0, wherein the second positive electrode active material is $Li_{1+x}Mn_{1-y}A'_yP_{1-z}E_zO_4$; and
   (ii) $0.001 \leq y \leq 0.500$, and $0.9 \leq n \leq 1.1$, wherein the second positive electrode active material is $Li_{1+x}M_{3n}Mn_{1-y}A'_yP_{1-z}E_zO_4$, wherein

   optionally, the second positive electrode active material is: (ii) $Li_{1+x}Mn_{1-y}A'_yP_{1-z}E_zO_4$.

5. The positive electrode plate according to any one of claims 1 to 4, wherein $0.032 \leq T \leq 0.043$, optionally, $0.035 \leq T \leq 0.039$.

6. The positive electrode plate according to any one of claims 1 to 5, wherein $0.11 \leq d \leq 0.16$, optionally, $0.12 \leq d \leq 0.14$.

7. The positive electrode plate according to any one of claims 1 to 6, wherein $0 < R \leq 1.2$, optionally, $0 < R \leq 1$.

8. The positive electrode plate according to any one of claims 1 to 7, wherein $M_1$ is element Mn.

9. The positive electrode plate according to any one of claims 1 to 8, satisfying at least one of the following conditions:

   $$3 \leq \frac{w_{(Mn)}}{w_{(A')}} \leq 20, \text{ optionally, } 4 \leq \frac{w(Mn)}{w(A')} \leq 18, \text{ and more optionally, } 5 \leq \frac{w_{(Mn)}}{w_{(A')}} \frac{w(Mn)}{w(A')} \leq 17;$$

   a $D_v50$ particle size of the second positive electrode active material is 0.21 μm to 1.53 μm, optionally 0.32 μm to 1.4 μm, more optionally 0.41 μm to 1.25 μm, further optionally 0.38 μm to 1.1 μm, and furthermore optionally 0.47 μm to 0.91 μm; and
   a specific surface area of the second positive electrode active material is 9.2 m²/g to 23.6 m²/g, optionally 10.5 m²/g to 19.6 m²/g, more optionally 12.0 m²/g to 16.2 m²/g, further optionally 10.0 m²/g to 21.5 m²/g, and furthermore optionally 10.9 m²/g to 17.6 m²/g.

10. The positive electrode plate according to claim 9, wherein $5 \leq \dfrac{w_{(Mn)}}{w_{(A')}} \dfrac{w(Mn)}{w(A')} \leq 17$, $0.02 \leq \dfrac{10 \times T}{d} \times w_{(M_1)} \times R \leq 0.085$, optionally $0.03 \leq \dfrac{10 \times T}{d} \times w_{(M_1)} \times R \leq 0.085$.

11. The positive electrode plate according to any one of claims 1 to 10, wherein a $D_v50$ particle size of the first positive electrode active material is 2.1 μm to 6.3 μm, optionally 3.5 μm to 4.9 μm.

12. The positive electrode plate according to any one of claims 1 to 11, wherein a specific surface area of the first positive electrode active material is 0.3 m²/g to 1.2 m²/g, optionally 0.5 m²/g to 0.9 m²/g.

13. The positive electrode plate according to any one of claims 1 to 12, wherein a surface of the first positive electrode active material is provided with a first coating layer, and optionally, the first coating layer comprises one or more elements of Ti, Al, B, Nb, Zr, Si, and W.

14. The positive electrode plate according to claim 13, wherein a thickness of the first coating layer is 20 nm to 150 nm.

15. The positive electrode plate according to any one of claims 1 to 14, wherein a surface of the second positive electrode active material is provided with a second coating layer, and optionally, the second coating layer comprises at least one of pyrophosphate, phosphate, and carbon.

16. The positive electrode plate according to claim 15, wherein a thickness of the second coating layer is 10 nm to 50 nm.

17. The positive electrode plate according to any one of claims 1 to 16, wherein in the second positive electrode active material, E comprises one or more elements of B, Si, N, and S.

18. The positive electrode plate according to any one of claims 1 to 17, wherein in the second positive electrode active material, A' comprises one or more elements of Fe, Ti, V, Ni, Co and Mg.

19. A secondary battery, comprising the positive electrode plate according to any one of claims 1 to 18.

20. An electric apparatus, comprising the positive electrode plate according to any one of claims 1 to 18, and/or the secondary battery according to claim 19.

| | | |
|---|---|---|
| **INTERNATIONAL SEARCH REPORT** | International application No. | |
| | **PCT/CN2023/074658** | |

**A.    CLASSIFICATION OF SUBJECT MATTER**

H01M4/136(2010.01)i；H01M4/13(2010.01)i；H01M10/0525(2010.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS；CNTXT；CNKI；WPABS；DWPI；USTXT；WOTXT；EPTXT: 宁德, 正极, 阴极, 镍钴锰, 三元, 磷酸锰锂, 厚度, 电阻, 重量, 质量, 公式, 掺杂, positive, cathode, nickel, ni, cobalt, co, manganese, mn, ternary, tertiary, lithium manganese phosphate, LiMnPO4, thickness, resistance, weight, mass, formula, dop+

**C.    DOCUMENTS CONSIDERED TO BE RELEVANT**

| Category* | Citation of document, with indication, where appropriate, of the relevant passages | Relevant to claim No. |
|---|---|---|
| A | CN 102427123 A (DONGGUAN AMPEREX TECHNOLOGY LTD. et al.) 25 April 2012 (2012-04-25)<br>    description, paragraphs [0005]-[0047] | 1-20 |
| A | CN 115336067 A (NINGDE AMPEREX TECHNOLOGY LTD.) 11 November 2022 (2022-11-11)<br>    entire document | 1-20 |
| A | CN 115528209 A (ZHUHAI COSMX BATTERY CO., LTD.) 27 December 2022 (2022-12-27)<br>    entire document | 1-20 |
| A | CN 115621412 A (BYD CO., LTD.) 17 January 2023 (2023-01-17)<br>    entire document | 1-20 |
| A | US 2012237826 A1 (KIM, K. S. et al.) 20 September 2012 (2012-09-20)<br>    entire document | 1-20 |

☐ Further documents are listed in the continuation of Box C.      ☑ See patent family annex.

| | |
|---|---|
| *      Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **08 August 2023** | **01 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/074658**

| Patent document cited in search report | | | Publication date (day/month/year) | Patent family member(s) | | | Publication date (day/month/year) |
|---|---|---|---|---|---|---|---|
| CN | 102427123 | A | 25 April 2012 | CN | 102427123 | B | 18 May 2016 |
| CN | 115336067 | A | 11 November 2022 | WO | 2023056612 | A1 | 13 April 2023 |
| CN | 115528209 | A | 27 December 2022 | None | | | |
| CN | 115621412 | A | 17 January 2023 | None | | | |
| US | 2012237826 | A1 | 20 September 2012 | KR | 20120106041 | A | 26 September 2012 |
| | | | | KR | 101342512 | B1 | 17 December 2013 |
| | | | | US | 8877375 | B2 | 04 November 2014 |

Form PCT/ISA/210 (patent family annex) (July 2022)